(19)

**Europäisches Patentamt**
**European Patent Office**
**Office européen des brevets**

(11) **EP 3 177 028 A1**

(12) **EUROPEAN PATENT APPLICATION**

(43) Date of publication:
**07.06.2017 Bulletin 2017/23**

(51) Int Cl.:
**H04N 21/472** (2011.01)     **H04N 21/4728** (2011.01)
**H04N 21/858** (2011.01)     **H04N 21/4402** (2011.01)
**H04N 21/83** (2011.01)

(21) Application number: **15306926.5**

(22) Date of filing: **04.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **CHEVALLIER, Louis**
**35576 Cesson-Sévigné (FR)**
• **HELLIER, Pierre**
**35576 Cesson-Sévigné (FR)**
• **LEBRUN, Marc**
**35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **METHODS AND APPARATUSES FOR DELIVERING AND RECEIVING VIDEO CONTENT**

(57)     Efficient techniques are provided for delivering video content appropriate for viewership on various display sizes and for zooming video content at a receiver device, upon reception of the video content. Information for zooming video content is embedded prior to delivering the video content. The information includes a position of a bounding box in a plurality of video frames of the video content. The position can be represented by a polynomial function. Temporal smoothing of the position and compression of the information can be applied. Methods (900, 1000), apparatuses (100,1100), computer-readable storage mediums and non-transitory computer-readable program products are provided for delivering video content and for zooming video content.

**Figure 9**

**Description**

TECHNICAL FIELD

The present disclosure relates to video content, in particular to delivering and to receiving video content.

BACKGROUND

Two opposing trends associated with image and video technology have emerged in the past years. The first one is the ability of video capturing or recording devices to capture increasingly higher resolutions. The second one is the reduction in video display or screen sizes, mainly driven by the proliferation of mobile devices including, for example, smart phones and smart watches. Since most video content is not produced with small-screen viewing in mind, the direct transfer of video content to small-screen devices provides a video on which the main objects of interest may become indistinguishable from the rest of the image. As a result, the viewing experience becomes compromised, particularly when viewing sports related events like a football game where observing the trajectory of the ball is an important part of the experience.

A third trend associated with image and video technology in households (or small offices) around the world is the reception of content from a service provider and further distribution to various types of devices with different display characteristics within the home through a wired or wireless home network. These devices may include, for example, a fifty five-inch high resolution television (TV) and a ten-inch tablet, both capable of receiving the same video data rate or bandwidth, but with contrasting screen sizes.

As a result of these various trends, intelligent zooming has become an area of increased interest. Current solutions propose to reframe the content based on an analysis of the content. This process, also known as reframing, exploits a technology of visual saliency that predicts the gaze of the viewers. However, extracting the saliency can be a computationally extensive process that cannot be performed on the receiver or display side.

It is therefore of interest to provide efficient techniques for delivering video content appropriate for viewership on various screen sizes and for zooming video content at a receiver device, upon reception of the video content. The present disclosure is directed towards such a technique.

SUMMARY

The present disclosure provides an efficient technique for delivering video content and for zooming video content.

According to one aspect of the present disclosure, a method of delivering video content is provided including accessing video content and metadata including information for zooming the video content, the information including at least one bounding box in a plurality of video frames of the video content, the at least one bounding box including at least one point, compressing the information by representing a position of the at least one point of the at least one bounding box in the plurality of video frames by at least one polynomial function, embedding the metadata in the video content, and delivering the video content including the embedded metadata.

According to one aspect of the present disclosure, an apparatus for delivering video content is provided including a processor in communication with at least one input/output interface, and at least one memory in communication with the processor, the processor being configured to perform any of the embodiments of the method of delivering video content.

According to one aspect of the present disclosure, a method of zooming video content is provided including receiving video content delivered according to any of the embodiments of the method of delivering video content, retrieving metadata from the video content, the metadata including information for zooming the video content, zooming the video content according to the metadata, and delivering the video content for display.

According to one aspect of the present disclosure, an apparatus for zooming video content is provided including a processor in communication with at least one input/output interface, and at least one memory in communication with the processor, the processor being configured to perform any of the embodiments of the method of zooming video content.

Additional features and advantages of the present disclosure will be made apparent from the following detailed description of illustrative embodiments which proceeds with reference to the accompanying figures.

BRIEF DESCRIPTION OF THE DRAWINGS

The present disclosure may be better understood in accordance with the following exemplary figures briefly described below:

Figure 1 illustrates an exemplary system for embedding zooming information in a video, delivering video content and receiving video content according to the present disclosure.

Figure 2 illustrates zooming by visualizing only the bounding box, according to the present disclosure;

Figure 3 illustrates zooming guided by the bounding-box according to the present disclosure;

Figure 4 illustrates adapting the bounding box for the current display and orientation, according to the present disclosure;

Figure 5 illustrates a sequence of frames or images within a movie and the detection of different shots within the movie, according to the present disclosure;

Figure 6 illustrates the frames of a particular shot and the corresponding frames showing the respective bounding boxes, according to the present disclosure;

Figure 7 illustrates curves of the position of a point in the bounding box along an axis as a function of time, according to the present disclosure;

Figure 8 illustrates a curve of the position of a point along the x-axis in the bounding box as a function of time, according to the present disclosure;

Figure 9 illustrates a flowchart of a method of delivering video content;

Figure 10 illustrates a flowchart of a method of zooming video content; and

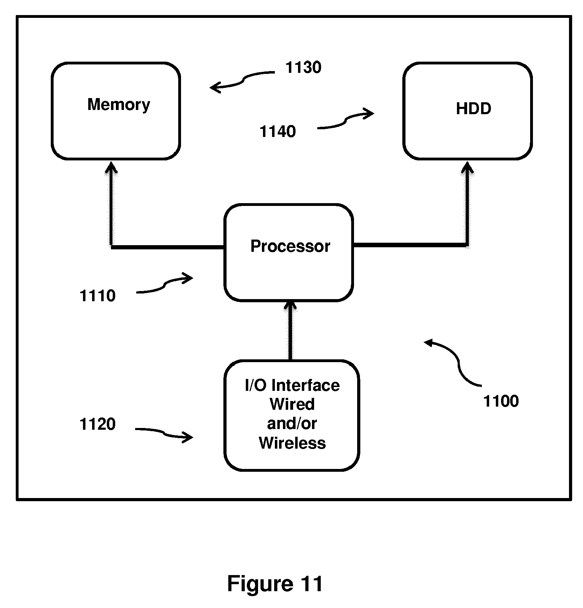

Figure 11 illustrates a block diagram of a computing environment within which aspects of the present disclosure can be implemented and executed.

## DETAILED DISCUSSION OF THE EMBODIMENTS

The present disclosure provides efficient techniques for delivering video content appropriate for viewership on various display sizes and for zooming video content at a receiver device, upon reception of the video content.

Other than the inventive concept, several elements hereby discussed are well known and will not be described in detail. For example, other than the inventive concept, familiarity with the concept of a bounding box and different techniques for generating a bounding box in an area of interest of an image or frame of video is assumed and not described herein in detail. One such technique is described in "Attention-based video reframing: validation using eye-tracking", by C. Charmaret and O. Le Meur, Proceedings of the 19th International Conference on Pattern Recognition, 8-11/12/2008, Tampa, Florida. It is to be understood that the extraction of a bounding box can also be manually done. It should also be noted that the inventive concept can be implemented using conventional programming techniques, which, as such, will not be described herein.

With the wide variety of screens and contents available nowadays, a major problem has risen: how to display, in a user-friendly way, video content that is not made for the screen size of the user device, for example, the display of a 4K movie on the small size of a smart phone screen. The usual solution of displaying the movie entirely in full screen mode is clearly not ideal. Even if the screen of the smart phone has the correct resolution (*e.g.*, for 1080p movies), the experience for the user may be really poor, since the screen size generally makes it practically impossible to distinguish details.

The present disclosure is directed towards the automatic and intelligent zoom of video content for different sizes of screen or display. In particular, the main interest is in how to visualize high definition video content (*e.g.*, 4K video content) on a smart phone, smart watch, tablet, or similar small device, and allow the user device to apply an intelligent zoom-in feature, driven by the size of the display or by the user's interest in the scene or shot.

A solution to this problem, according to the present disclosure, is to embed zooming information in the video content. The zooming information can include at least one bounding box delineating an area of interest in a frame of video, picture or image, and its position in the frame, picture or image plane (*e.g.*, in the x and y axes). A bounding box is defined herein as a polygon drawn around an area of interest in the frame or picture. This concept can be extended to a volume, in the case of 3D objects or movies. In general, the polygon is a rectangle and the four sides of the rectangle are, either, vertical or horizontal, parallel to the x or y axis. Without loss of generality, a rectangle is assumed in the following disclosure but other shapes can apply.

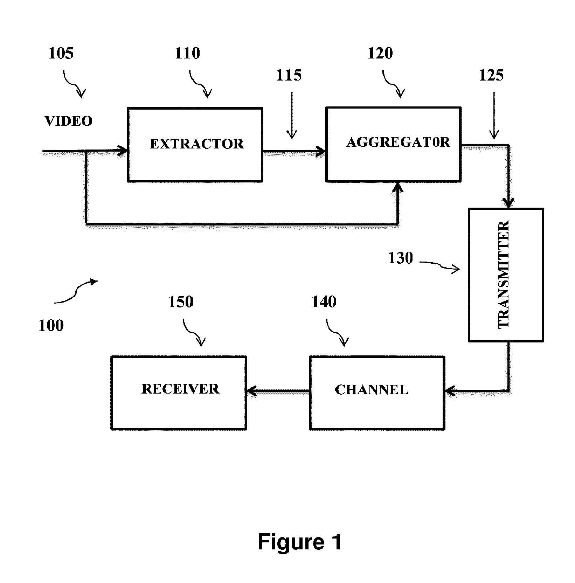

Figure 1 illustrates an exemplary system 100 according to the present disclosure. Video content (*e.g.*, a movie) or picture or image 105 is analyzed and zooming information is extracted in extractor 110, according to any of the known techniques in the art of intelligent zooming (*e.g.*, the reference previously cited, by C. Charmaret and O. Le Meur). The output of the extractor includes the zooming information 115 which is then embedded or aggregated as metadata with the video in aggregator 120. The metadata can include additional information beyond the zooming information (*e.g.*, sales information about the object of interest, etc.). The embedding or aggregation can happen prior to or after video encoding (*e.g.*, source or channel encoding). Next, a transmitter 130 sends the aggregated video 125 via a wired or wireless channel 140, and a receiver 150 receives the aggregated video 125 and retrieves the metadata to obtain the zooming information 115 for display. It is to be understood that the process of extraction of a bounding box can also be manually performed and stored for later retrieval by the aggregator 120.

It is to be understood that the channel 140 can be any type of channel, wireless or wired, including but not limited to cable, satellite, phone lines, terrestrial broadcast, etc. The transmitter 130 and receiver 150 are therefore appropriate for the channel of choice. The transmitter can include source and channel encoders, and modulators. The receiver can include the corresponding source and channel decoders, and demodulators. Other functionalities or components can also be added to the transmitters (receivers), like randomizers (de-randomizers) and interleavers (de-interleavers) and antennas.

It is to be understood that the components (110, 120, 130, 150) of system 100 can each include a processor for processing data and for controlling various functions of the device, at least one input/output (I/O) interface and storage in at least one memory, which can be a transitory memory such as Random Access Memory (RAM), and/or a non-transitory memory such as a Read-Only Memory (ROM), a hard drive and/or a flash memory, for processing and storing different files and information as necessary, including computer program products and software. It is also to be understood that the extractor 110, aggregator 120 and transmitter 140 can be separately or jointly implemented in any of the possible combinations. Furthermore, it is to be understood that the present disclosure also applies to t aggregated video 125 that is not transmitted on a channel (*e.g.*, channel 140) but stored in transitory or non-transitory memory to be later accessed by a receiver.

As it is apparent from Figure 1, the system according to the present disclosure performs the aggregation on the transmitter, server or service provider side (*i.e.*, before the channel), and stream (or store) the content with the aggregated metadata with the reframing or zooming capability. The associated metadata according to the present disclosure can have a small bandwidth or bit rate and can thus be transmitted or delivered seamlessly.

However, it is to be understood that the transmitter or server side according to the present disclosure (hereby referred to as the server) can be collocated with the receiver side. For example, in a home network, the server can be a computer device (or computer devices) that performs the functionalities of the extractor 110, aggregator 120 and transmitter 130, and delivers the aggregated video content 125 to other devices 150 (*e.g.*, a tablet, smart phone or TV), by wired or wireless means. It is to be understood that the server of the present disclosure can itself also be a receiver that receives video content from another server or service provider (*e.g.*, a television broadcaster, or an internet video content provider) and provides aggregated video 125 to other receivers 150.

The present disclosure may also apply to broadcast of sports events, such as a football game. Given an amount of latency induced by the computation of a visual saliency, or a manual or automatic annotation of where the football is, users can watch games on small devices such as smart phones and tablets.

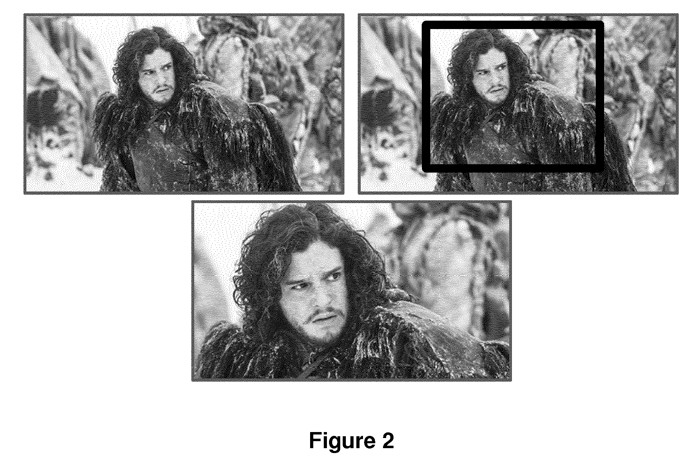

The system for embedding or aggregating zooming information as metadata, according to the present disclosure, allows the receiver device to perform a variety of functionalities, with or without a user's input. A first functionality is that of zooming by visualizing only the bounding box, as illustrated by Figure 2. The top left image in Figure 2 shows an original 1920x1080 pixel image. The top right image in Figure 2 illustrates a bounding box around the area of interest for display, the person's upper body. Finally, the bottom image is the zoomed-in display provided by the bounding box and displayed in the aspect ratio of the display (*e.g.*, 16:9).

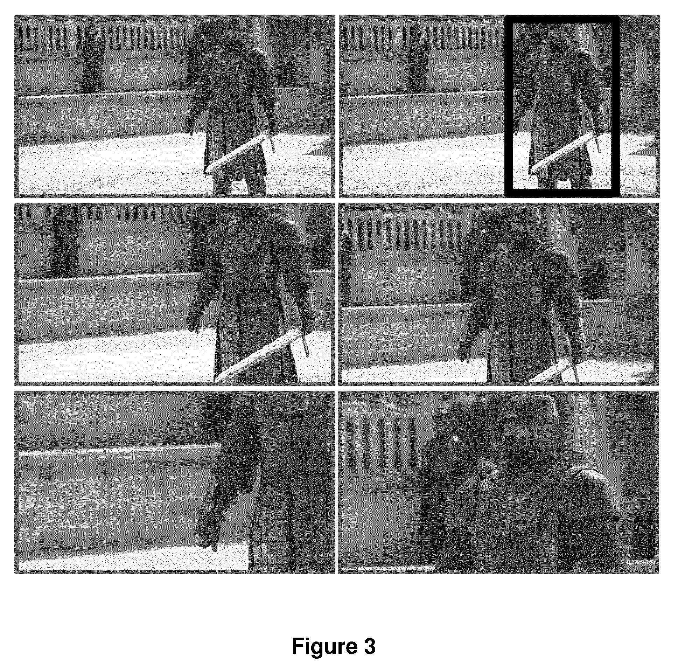

A second functionality is that of zooming guided by the bounding-box, as illustrated by Figure 3. In this functionality, the bounding box provides boundaries for zooming. In Figure 3, the top left image is the original image with a 16:9 aspect ratio, and the top right image illustrates the bounding box around the gladiator. The center and bottom left images show zoomed-in images by a zoom-in, or increasing, factor centered in the image. The center and bottom right images show zoomed-in images using the same respective increasing factors weighed by the bounding box, that is, taking the bounding box into consideration. The weight can center the image around the bounding box, or move the bounding box as close to the center as possible, considering the boundaries of the original image and the position of the bounding box in the original image. For example, if the bounding box is at the right corner of the original image, the zoom capability can maintain the bounding box shifted towards the right corner of the image for a more seamless zoom that is, for example, without jumps.

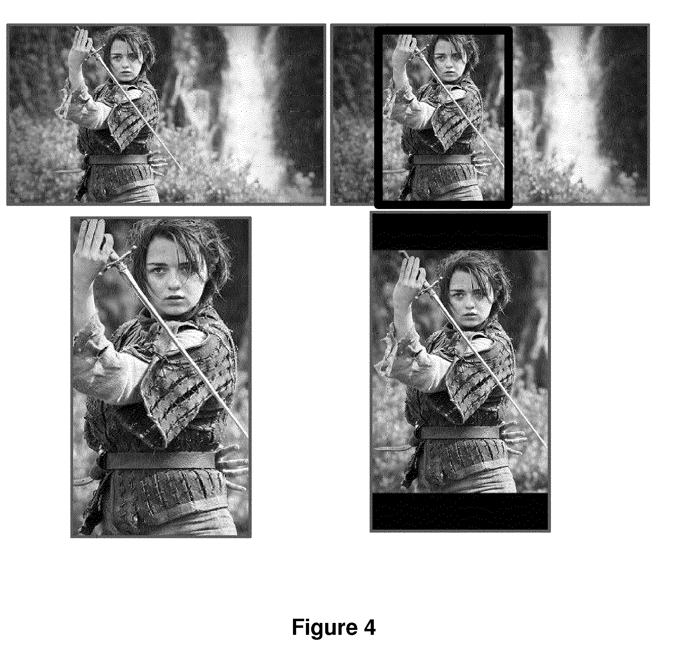

A third functionality is that of zooming by adapting the bounding box for the current display and orientation (*e.g.*, portrait versus landscape), as also illustrated in Figures 2 and 3. In one option, in Figure 2 bottom image, the aspect ratio of the image is adjusted (for a bounding box with a different aspect ratio) by zooming inside the bounding box. In another option, in Figure 3, the aspect ratio is adjusted by including a larger portion of the image beyond the bounding box. In Figure 4, the bounding box permits a change in the image display from landscape to portrait. The top left image is in landscape mode (1920x1080 pixels). The top right image illustrates the bounding box. The bottom left image illustrates the zoomed image in portrait mode (1080x1920 pixels) and the bottom right image illustrates the portrait mode adapted to the limit of the bounding box, and filled with black beyond the bounding box of the image.

A fourth functionality is that of supporting interactivity by supporting object designation by the end user. This functionality is possible if multiple bounding boxes per image or frame are placed in the metadata, representing different areas of interest in the image. As a result, the user may choose an area of interest to zoom by touching the area of the image, or clicking on the area of the image with a mouse or pen. This functionality also allows the user to change focus from one bounding box to another in real time, while viewing the content.

The generation of metadata including the zooming information can also require consideration of the temporal consistency of the bounding box positions. One cannot use the generated raw bounding box for each image, since they can drastically move over time, producing artificial and painful shaking to the viewer's eyes.

According to the present disclosure, the positions of the bounding boxes can be smoothed over time. For example, the trajectory of a corner point of the bounding boxes in the video over time can be analyzed and temporally smoothed.

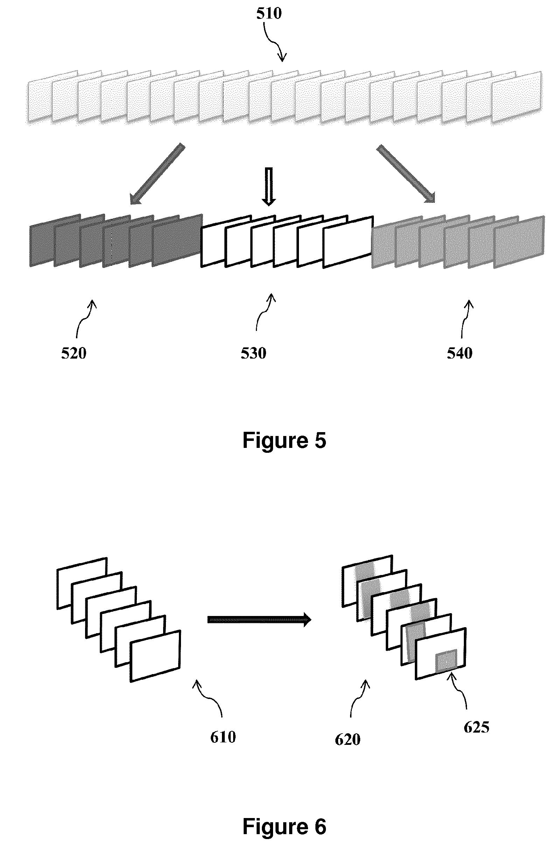

Prior to smoothing, the video is divided into different shots and, inside one of the shots, a bounding box for the main region of interest is provided for every frame. In filmmaking and video production, a shot is a series of frames that runs for an uninterrupted period of time. More particularly, in film editing, a shot is the continuous footage or sequence between two edits or cuts. Figure 5 and Figure 6 illustrate the concept.

Figure 5 illustrates a sequence of frames or images for the movie 510 and the detection of the different shots within the movie, as illustrated by the sequences of frames for shots 520, 530 and 540.

Figure 6 illustrates the frames of a particular shot 610 (similar to shots 520, 530 or 540 of Figure 5) on the left, and the corresponding frames 620 on the right, showing the respective bounding boxes in each, in darker shade, as exemplified by bounding box 625 in the first frame. One may observe the variability of the bounding box positions throughout the sequence of frames, which may not be reflective of a real movie, but shown in Figure 6 for exemplary purposes.

As previously mentioned, since the positions of the bounding boxes over time may have some strong variations that are likely to cause an unpleasant and artificial shaking effect, one needs to smooth those variations over time. According to the present disclosure, one solution is to apply a Total Variation Regularization (TVR) in order to flatten the small variations or jitter, while also maintaining the big jumps generally associated with shots (edges). In signal processing, total variation denoising, also known as Total Variation Regularization is a process, most often used in digital image processing, that has applications in noise removal. It is based on the principle that signals with excessive and possibly spurious details have high total variation, that is, the integral of the absolute gradient of the signal is high. According to this principle, reducing the total variation of the signal subject to it being a close match to the original signal removes unwanted detail while preserving important details such as edges. In another solution, a simple Gaussian filter can be utilized, in the case of one-dimensional (1D) filtering. The Gaussian filter solution is sub-optimal, compared with TVR, since it is not as edge preserving as TVR.

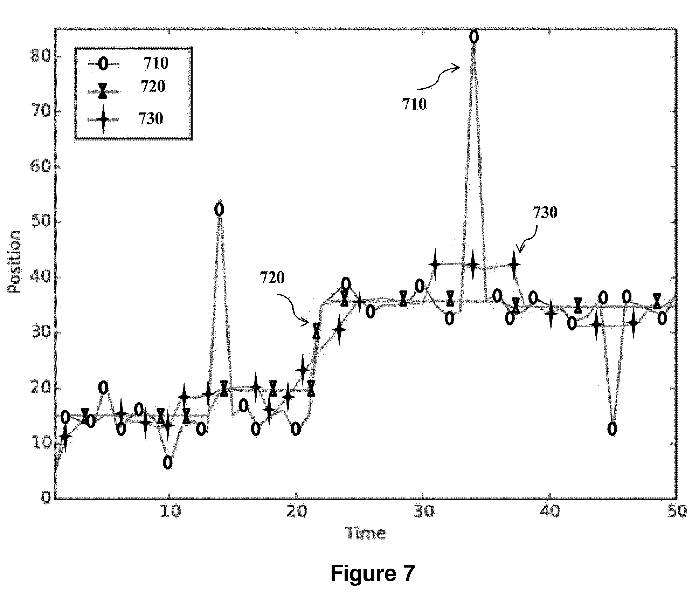

Figure 7 illustrates curves of the position (*e.g.*, in centimeters) of a point in the bounding box (*e.g.*, center or corner) along an axis as a function of time (*e.g.*, in milliseconds) for unfiltered and filtered cases assuming 1D filtering. Curve 710 shows the raw data from the original movie after the zooming information and bounding boxes (*e.g.*, zooming information 115) are generated (*i.e.*, after Extractor 110). In curve 710, the variability of the position of the bounding box is evident. Curve 720 shows the result of 1D filtering with TVR being applied to the bounding box position. Curve 720 is almost flat, except for sharp transitions at shot edges. Finally, curve 730 shows the result of 1D filtering with a simple sliding average filter being applied. One may observe that curves 720 and 730 are more pleasing to the eye, since they have less variability.

According to the present disclosure, If the center of the bounding box is to be filtered, filtering it directly in 2D on its (x,y) position (and not separately over x and y) may be preferable. Any type of filter can be used for temporal smoothing (*e.g.*, Gaussian filter, Gabor filter, etc.). It is to be understood that one may smooth at least one corner point of the bounding box (*e.g.*, top-left point).

Once the bounding box positions have been temporally smoothed, all the useful metadata can be stored for each frame. Some examples of metadata storage according to the present disclosure are:

a. Only the top-left and bottom-right corners of the bounding box is stored. Similarly, only the bottom-left and top-right corners can be stored, without loss of generality. Alternatively, the center position and the aspect ratio of the bounding box can be stored as metadata.

b. Bounding boxes for different kinds of displays (aspect ratio and orientation) are stored. Hence, at the receiver, a choice is made for the bounding box closest to the aspect ratio of the receiver display.

c. Bounding box(es) for the most interesting area(s) of the image and the minimal bounding box(es) around it. This particular example can be based on face detection.

According to the present disclosure, compression can also be applied to the metadata, in order to reduce the amount of data. Any of the known methods of data compression can be applied (*e.g.*, arithmetic coding, Huffman coding). Also, as previously mentioned, to avoid embedding too much data, only two points, the top-left and bottom-right corner of the bounding box, can be stored in each frame of the video. As each point requires two values (x-coordinate and y-coordinate), four values need to be stored per bounding box.

According to the present disclosure, since the coordinates are integer values, one can use pairing functions to compress the data even further (*e.g.*, the Cantor pairing function). In mathematics, a pairing function is a process to uniquely encode two natural numbers into a single natural number. Any pairing function can be used in set theory to prove that integers and rational numbers have the same cardinality as natural numbers. For example, in the case of two points per bounding box, by using a pairing function, only two integer values need to be stored, one per point. At the receiver, the inverse of the pairing function is used to recover each point from one value representing point.

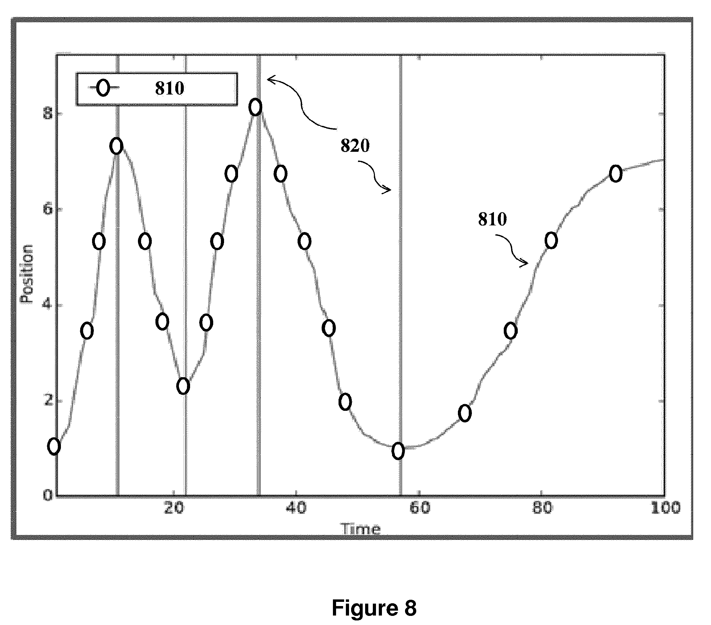

According to the present disclosure, another way to compress the data is to approximate the positions of the points of the bounding boxes by a low-degree polynomial function. Thus, by sending the coefficients of the corresponding polynomial function in the beginning of a shot, more data can be saved. It is to be understood that if the bounding boxes have all the same size over time, then only one point is needed to represent a bounding box. Otherwise, for each point of the bounding box, an approximation is needed. At the receiver, the polynomial function is used to identify the positions of the points of the bounding boxes for which interpolation was used. One exemplary kind of interpolation that can be used is illustrated in Figure 8. Figure 8 shows the evolution of the x-axis position of a point of a bounding box over time (*e.g.*, in milliseconds) 810. Observe that the position in Figure 8 has been previously temporally smoothed, so that there is no jitter. The process of interpolation is described as follow:

i. First, both temporal extremes of a bounding box for a particular object are found, *i.e.* first and last time of appearance.
ii. Next, the trajectory of at least one point of the bounding box over time (or equivalently, over a plurality of frames or images of the video) can be divided into small segments 820 where the trajectory points follow a monotonic curve.
iii. Then, for each segment, a couple of trajectory points are obtained: the position for the first and the last frames of the segment. For the provided example in Figure 8, the couple of points for the various segments are: (0, 11), (12, 22), (23, 34), (35, 57) and (58, 100).
iv. For each monotonic portion or segment of the curve, a low degree polynomial approximating the curve is estimated. The following disclosure describes an example of a third degree polynomial function.

In the case of a third degree polynomial function, one looks for P(x) which minimizes:

$$\min_P \sum_i \left( y_i - P(x_i) \right)^2 \qquad (1)$$

As $P(x) = \alpha x^3 + \beta x^2 + \gamma x + \delta$, the following can be derived:

$$\min_{\alpha,\beta,\gamma,\delta} \sum_i (y_i - \alpha x_i^3 - \beta x_i^2 - \gamma x_i - \delta)^2 \qquad (2)$$

Equation (2) is equivalent to the problem:

$$\begin{pmatrix} \alpha \\ \beta \\ \gamma \\ \delta \end{pmatrix} \begin{pmatrix} \sum_i x_i^3 & \sum_i x_i^2 & \sum_i x_i & \sum_i 1 \\ \sum_i x_i^4 & \sum_i x_i^3 & \sum_i x_i^2 & \sum_i x_i \\ \sum_i x_i^5 & \sum_i x_i^4 & \sum_i x_i^3 & \sum_i x_i^2 \\ \sum_i x_i^6 & \sum_i x_i^5 & \sum_i x_i^4 & \sum_i x_i^3 \end{pmatrix} = \begin{pmatrix} \sum_i y_i \\ \sum_i x_i y_i \\ \sum_i x_i^2 y_i \\ \sum_i x_i^3 y_i \end{pmatrix} \qquad (3)$$

Solving the problem in equation (3) is equivalent to inverting a 4x4 matrix, for which the solution can be analytically obtained or derived using well known mathematical software packages (*e.g.*, Matlab™).

Since it is desirable to have the same value for the first point of a segment and the last point of the previous segment (as well as for the other extreme points of each segment), one can add this constraint to the previous minimization, or increase the weight of extreme point values.

Approximating a position of corner points of the bounding boxes as described above is yet another way to smooth them, and can be used jointly with temporal smoothing.

According to the present disclosure, the metadata can include bounding boxes for every kind of display and orientation (*e.g.*, smart phone, laptop, tablet, TV, UHD TV, landscape and portrait orientation for every different kind of resolution, etc.). In addition, bounding boxes can serve different purposes, like zooming, reframing and interactivity. Hence, information indicating the role of the bounding box can be included in the metadata, attached to each trajectory. This information will then be used at rendering time by the receiver. In addition, the metadata can also include additional information, *e.g.*, the Uniform Resource Locator, url, to a webpage providing further information on the object (*e.g.*, movie related information, actor related information, sales information, etc.).

A system according to the present disclosure, such as system 100 in Figure 1 can encompass the additional functionalities discussed above, namely, temporally smoothing the bounding box positions, compressing the bounding box position information (which is included in the metadata) and generating all the necessary metadata prior to aggregating the metadata and the video (or similarly, embedding the metadata into the video). These functions can be encompassed in an aggregator (*e.g.*, aggregator 120) or extractor (*e.g.*, extractor 110).

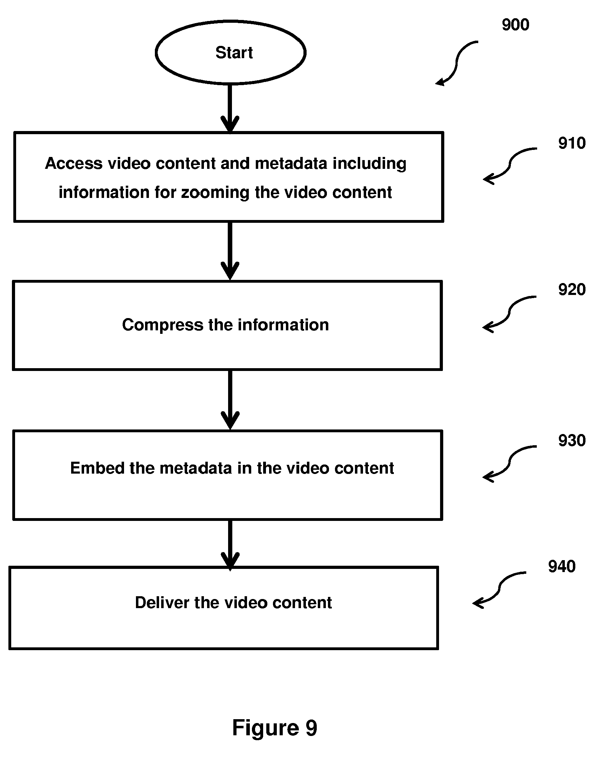

Figure 9 illustrates a flowchart 900 of an exemplary method of delivering video content according to the present disclosure. The method 900 includes, at step 910, accessing video content and metadata including information for zooming the video content, the information for zooming including at least one bounding box in a plurality of video frames of the video content, the at least one bounding box including at least one point and being used for zooming the video content. Next, at step 920, the method includes compressing the information by representing a position of the at least one point of the at least one bounding box in the plurality of video frames by at least one polynomial function. Then, at step 930, the method includes embedding the metadata in the video content. Finally, at step 940, the method includes delivering the video content including the embedded metadata. The compressing can use any known method of compression.

According to one embodiment of the method, the at least one polynomial function is a low degree polynomial.

According to one embodiment of the method, the at least one polynomial function is a third degree polynomial.

According to one embodiment of the method, the step of compressing further includes representing at least one bounding box by only two points. The two points can be two corner points, *e.g.*, a left top point and a right bottom point.

According to one embodiment of the method, the step of compressing further includes representing at least one bounding box by a point and an indication of size. For example, a corner (or center) point and the size dimensions, or a corner (or center) point and an aspect ratio.

According to one embodiment of the method, the step of compressing further includes using a pairing function to represent at least one point by only one value. The pairing function can be a Cantor pairing function.

According to one embodiment of the method, the method further includes temporally smoothing a position of the at least one point of the at least one bounding box in the plurality of video frames prior to embedding.

According to one embodiment of the method, the temporally smoothing further includes applying a total variation regularization to the position of the at least one point of the at least one bounding box.

According to one embodiment of the method, the information is a function of at least one display size.

According to one embodiment of the method, the plurality of video frames includes at least one shot of the video content.

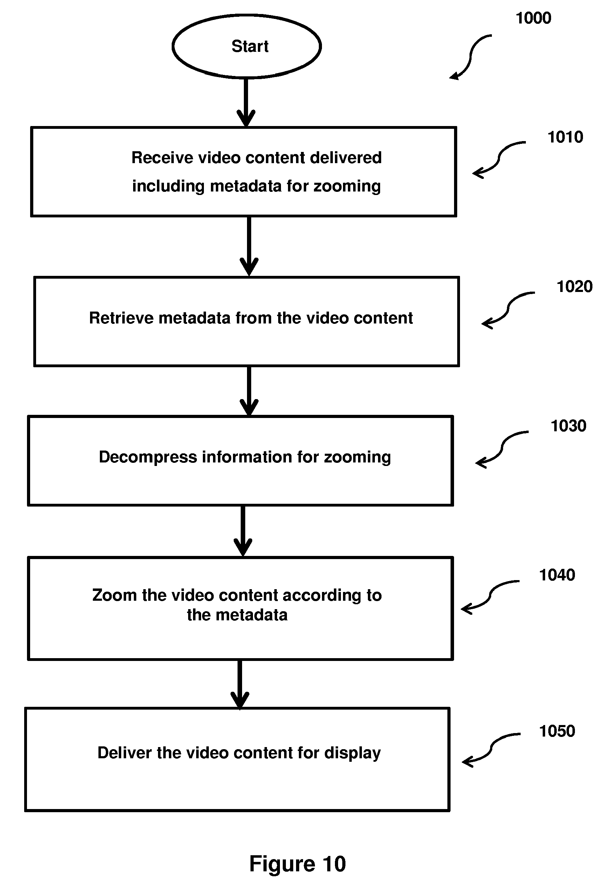

Figure 10 illustrates a flowchart 1000 of an exemplary method of zooming video content according to the present disclosure. The method includes, at step 1010, receiving video content delivered according to any of the embodiments of the method of delivering video content similar to one or more steps described in flowchart 900. Next, at step 1020, the method includes retrieving metadata from the video content, the metadata including information for zooming the video content. Then, at step 1030, the method includes decompressing the information by obtaining a position of at least one point of the at least one bounding box in the plurality of video frames from at least one polynomial function. Next, at step 1040, the method includes zooming the video content according to the decompressed information. Finally, at step 1050, the method includes delivering the video content for display.

According to one embodiment, the decompressing further includes using an inverse of a pairing function for at least one point to obtain each at least one point from one value.

According to one embodiment of the method, the method further includes determining a display size for viewership of the video content prior to zooming.

According to one embodiment of the method, the step of zooming further includes zooming the video content according to a user's input. This feature is associated with interactivity. The viewer may choose a point of interest to zoom by touching the area of the image, or clicking on the area of the image with a mouse or pen.

In the present disclosure, the step of accessing associated with flowchart 900 can imply accessing or retrieving, or generating and then accessing. The step of receiving associated with flowchart 1000 can imply receiving, accessing or retrieving. The step of delivering associated with flowchart 900 can imply outputting, transmitting or storing in memory for later access or retrieval. Flowchart 1000 can also equivalently represent a method of receiving video content.

It is to be understood that any of the methods of the present disclosure can be implemented in various forms of hardware, software, firmware, special purpose processors, or a combination thereof. The present disclosure can be implemented as a combination of hardware and software. Moreover, the software can be implemented as an application program tangibly embodied on a program storage device. The application program can be uploaded to, and executed by, a machine including any suitable architecture. The machine can implemented on a computer platform having hardware such as one or more central processing units (CPU), a random access memory (RAM), and input/output (I/O) interface(s). The computer platform also includes an operating system and microinstruction code. The various processes and functions described herein can either be part of the microinstruction code or part of the application program (or a combination thereof), which is executed via the operating system. In addition, various other peripheral devices can be connected to the computer platform such as an additional data storage device and a printing device.

Figure 1100 illustrates a block diagram of an exemplary computing environment 1100 within which any of the methods of the present disclosure can be implemented and executed. The computing environment 1100 includes a processor 1110, and at least one (and preferably more than one) I/O interface 1120. The I/O interface 1120 can be wired or wireless and, in the wireless implementation is pre-configured with the appropriate wireless communication protocols to allow the computing environment 1100 to operate on a global network (*e.g.*, internet) and communicate with other computers or servers (*e.g.*, cloud based computing or storage servers) so as to enable the present disclosure to be provided, for example, as a Software as a Service (SAAS) feature remotely provided to end users. One or more memories 1130 and/or storage devices (Hard Disk Drive, HDD) 1140 are also provided within the computing environment 1100. The computing environment can be used to implement a node or device, and/or a controller or server that operates the storage system. The computing environment can be, but is not limited to, desktop computers, cellular phones, smart phones, phone watches, tablet computers, personal digital assistant (PDA), netbooks, laptop computers, set-top boxes or general multimedia content receiver and/or transmitter devices.

Furthermore, aspects of the present disclosure can take the form of a computer-readable storage medium. Any combination of one or more computer-readable storage medium(s) can be utilized. A computer-readable storage medium can take the form of a computer-readable program product embodied in one or more computer-readable medium(s) and having computer-readable program code embodied thereon that is executable by a computer. A computer-readable storage medium as used herein is considered a non-transitory storage medium given the inherent capability to store the information therein as well as the inherent capability to provide retrieval of the information therefrom. A computer-readable storage medium can be, for example, but is not limited to, an electronic, magnetic, optical, electromagnetic, infrared, or semiconductor system, apparatus, or device, or any suitable combination of the foregoing.

It is to be appreciated that the following list, while providing more specific examples of computer-readable storage mediums to which the present disclosure can be applied, is merely an illustrative and not exhaustive listing as is readily appreciated by one of ordinary skill in the art. The list of examples includes a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

According to one aspect of the present disclosure, a method of delivering video content is provided including accessing video content and metadata including information for zooming the video content, the information including at least one bounding box in a plurality of video frames of the video content, the at least one bounding box including at least one point, compressing the information by representing a position of the at least one point of the at least one bounding box in the plurality of video frames by at least one polynomial function, embedding the metadata in the video content, and delivering the video content including the embedded metadata.

According to one embodiment of the method, the at least one polynomial function is a low degree polynomial.

According to one embodiment of the method, the at least one polynomial function is a third degree polynomial.

According to one embodiment of the method, the compressing further includes representing at least one bounding box by only two points.

According to one embodiment of the method, the compressing further includes representing at least one bounding box by a point and an indication of size.

According to one embodiment of the method, the compressing further includes using a pairing function to represent at least one point by only one value.

According to one embodiment of the method, the method further includes temporally smoothing the position of the at least one point of the at least one bounding box in the plurality of video frames prior to embedding.

According to one embodiment of the method, the temporally smoothing further includes applying a total variation regularization to the position of the at least one point of the at least one bounding box.

According to one embodiment of the method, the information is a function of at least one display size.

According to one embodiment of the method, the plurality of video frames includes at least one shot of the video content.

According to one aspect of the present disclosure, an apparatus for delivering video content is provided including a processor in communication with at least one input/output interface, and at least one memory in communication with the processor, the processor being configured to perform any of the embodiments of the method of delivering video content.

According to one aspect of the present disclosure, a computer-readable storage medium carrying a software program is provided including program code instructions for performing any of the embodiments of the method of delivering video content.

According to one aspect of the present disclosure, a non-transitory computer-readable program product is provided including program code instructions for performing any of the embodiments of the method of delivering video content when the program is executed by a computer.

According to one aspect of the present disclosure, a method of zooming video content is provided including receiving video content delivered according to any of the embodiments of the method of delivering video content, retrieving metadata from the video content, the metadata including information for zooming the video content, decompressing the information by obtaining a position of at least one point of the at least one bounding box in the plurality of video frames from at least one polynomial function, zooming the video content according to the decompressed information, and delivering the video content for display.

According to one embodiment, the decompressing further includes using an inverse of a pairing function for at least one point to obtain each at least one point from one value.

According to one embodiment of the method, the method further includes determining a display size for viewership of the video content prior to zooming.

According to one embodiment of the method, the zooming further includes zooming the video content according to a user's input.

According to one aspect of the present disclosure, an apparatus for zooming video content is provided including a processor in communication with at least one input/output interface, and at least one memory in communication with the processor, the processor being configured to perform any of the embodiments of the method of zooming video content.

According to one aspect of the present disclosure, a computer-readable storage medium carrying a software program is provided including program code instructions for performing any of the embodiments of the method of zooming video content.

According to one aspect of the present disclosure, a non-transitory computer-readable program product is provided including program code instructions for performing any of the embodiments of the method of zooming video content when the program is executed by a computer.

It is to be further understood that, because some of the constituent system components and methods depicted in the accompanying drawings are preferably implemented in software, the actual connections between the system components or the process function blocks can differ depending upon the manner in which the present disclosure is programmed. Given the teachings herein, one of ordinary skill in the pertinent art will be able to contemplate these and similar implementations or configurations within the scope of the present disclosure.

Although the illustrative embodiments have been described herein with reference to the accompanying drawings, it is to be understood that the present disclosure is not limited to those precise embodiments, and that various changes and modifications can be effected therein by one of ordinary skill in the pertinent art without departing from the scope of the present disclosure. All such changes and modifications are intended to be included within the scope of the present disclosure as set forth in the appended claims.

## Claims

1. A method (900) of delivering video content comprising:

    accessing (910) video content and metadata including information for zooming said video content, the information including at least one bounding box in a plurality of video frames of said video content, said at least one bounding box comprising at least one point;
    compressing (920) said information by representing a position of said at least one point of said at least one bounding box in said plurality of video frames by at least one polynomial function;
    embedding (930) said metadata in said video content; and
    delivering (940) said video content including said embedded metadata.

2. The method according to claim 1 wherein the at least one polynomial function is a low degree polynomial.

3. The method according to claim 2 wherein the at least one polynomial function is a third degree polynomial.

4. The method according to any of the claims 1 to 3 wherein said compressing further comprises:

    representing at least one bounding box by only two points.

5. The method according to any of the claims 1 to 4 wherein said compressing further comprises:

    representing at least one bounding box by a point and an indication of size.

6. The method according to any of the claims 1 to 5 wherein said compressing further comprises:

using a pairing function to represent at least one point by only one value.

7.  The method according to any of the claims 1 to 6 further comprising:

    temporally smoothing a position of said at least one point of said at least one bounding box in said plurality of video frames prior to embedding.

8.  The method according to claim 7 wherein the temporally smoothing further comprises:

    applying a total variation regularization to the position of the at least one point of the at least one bounding box.

9.  The method according to any of the claims 1 to 8 wherein said information is a function of at least one display size.

10. A method (1000) of zooming video content comprising:

    receiving (1010) video content delivered according to any of the claims 1 to 9;
    retrieving (1020) metadata from said video content, said metadata including information for zooming said video content;
    decompressing (1030) said information by obtaining a position of at least one point of the at least one bounding box in the plurality of video frames from at least one polynomial function;
    zooming (1040) said video content according to said decompressed information; and
    delivering (1050) said video content for display.

11. The method according to claim 10 wherein the decompressing further comprises:

    using an inverse of a pairing function for at least one point to obtain each at least one point from one value.

12. The method according to claim 10 further comprising:

    determining a display size for viewership of said video content prior to zooming.

13. An apparatus (1100) comprising a processor (1110) in communication with at least one input/output interface (1120); and at least one memory (1130, 1140) in communication with said processor, said processor being configured to perform the method according to any of the claims 1 to 12.

14. A computer-readable storage medium carrying a software program comprising program code instructions for performing the method according to any of the claims 1 to 12.

15. A non-transitory computer-readable program product comprising program code instructions for performing the method according to any of the claims 1 to 12 when the program is executed by a computer.

105          110                 120           125

115

VIDEO

| EXTRACTOR | | AGGREGAT0R |

TRANSMITTER

130

100       150          140

| RECEIVER | | CHANNEL |

## Figure 1

Figure 2

**Figure 3**

# Figure 4

510

520                     530                     540

**Figure 5**

610              620              625

**Figure 6**

**Figure 7**

EP 3 177 028 A1

Figure 8

Figure 9

```
                        ┌─────────┐
                        │  Start  │                          1000
                        └─────────┘                      ⟍
                             │
                             ▼
        ┌───────────────────────────────────────────┐      1010
        │     Receive video content delivered        │   ⟍
        │      including metadata for zooming         │
        └───────────────────────────────────────────┘
                             │
                             ▼
        ┌───────────────────────────────────────────┐      1020
        │     Retrieve metadata from the video content│   ⟍
        │                                             │
        └───────────────────────────────────────────┘
                             │
                             ▼
        ┌───────────────────────────────────────────┐      1030
        │       Decompress information for zooming    │   ⟍
        │                                             │
        └───────────────────────────────────────────┘
                             │
                             ▼
        ┌───────────────────────────────────────────┐      1040
        │      Zoom the video content according to    │   ⟍
        │              the metadata                   │
        └───────────────────────────────────────────┘
                             │
                             ▼
        ┌───────────────────────────────────────────┐      1050
        │      Deliver the video content for display  │   ⟍
        │                                             │
        └───────────────────────────────────────────┘
```

Figure 10

**Figure 11**

Europäisches
Patentamt

European
Patent Office

Office européen
des brevets

# EUROPEAN SEARCH REPORT

Application Number

EP 15 30 6926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2011/299832 A1 (BUTCHER THOMAS [US]) 8 December 2011 (2011-12-08) * paragraphs [0001], [0003], [0015], [0016], [0020], [0026] - [0029]; figure 2 * ----- | 1-15 | INV. H04N21/472 H04N21/4728 H04N21/858 H04N21/4402 H04N21/83 |
| Y | US 2005/036686 A1 (KANEKO TOSHIMITSU [JP] ET AL) 17 February 2005 (2005-02-17) * figures 1,2A-2D * * paragraphs [0008], [0013], [0098] - [0104], [0248] * ----- | 1-15 | |
| A | US 2006/061602 A1 (SCHMOUKER PHILIPPE [FR] ET AL) 23 March 2006 (2006-03-23) * the whole document * ----- | 1-15 | |

| | TECHNICAL FIELDS SEARCHED (IPC) |
|---|---|
| | H04N |

The present search report has been drawn up for all claims

| Place of search | Date of completion of the search | Examiner |
|---|---|---|
| The Hague | 27 May 2016 | Doyle, Walter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6926

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2016

| Patent document cited in search report | | Publication date | Patent family member(s) | | Publication date |
|---|---|---|---|---|---|
| US 2011299832 | A1 | 08-12-2011 | CN | 102244807 A | 16-11-2011 |
| | | | US | 2011299832 A1 | 08-12-2011 |
| US 2005036686 | A1 | 17-02-2005 | EP | 1024667 A2 | 02-08-2000 |
| | | | JP | 4226730 B2 | 18-02-2009 |
| | | | JP | 2000285253 A | 13-10-2000 |
| | | | US | 6940997 B1 | 06-09-2005 |
| | | | US | 2003044071 A1 | 06-03-2003 |
| | | | US | 2003044072 A1 | 06-03-2003 |
| | | | US | 2003053539 A1 | 20-03-2003 |
| | | | US | 2003086613 A1 | 08-05-2003 |
| | | | US | 2005031204 A1 | 10-02-2005 |
| | | | US | 2005031205 A1 | 10-02-2005 |
| | | | US | 2005031206 A1 | 10-02-2005 |
| | | | US | 2005031207 A1 | 10-02-2005 |
| | | | US | 2005036683 A1 | 17-02-2005 |
| | | | US | 2005036684 A1 | 17-02-2005 |
| | | | US | 2005036685 A1 | 17-02-2005 |
| | | | US | 2005036686 A1 | 17-02-2005 |
| | | | US | 2007211945 A1 | 13-09-2007 |
| | | | US | 2007217684 A1 | 20-09-2007 |
| | | | US | 2007217685 A1 | 20-09-2007 |
| | | | US | 2007274595 A1 | 29-11-2007 |
| US 2006061602 | A1 | 23-03-2006 | CN | 1750618 A | 22-03-2006 |
| | | | EP | 1638321 A1 | 22-03-2006 |
| | | | FR | 2875662 A1 | 24-03-2006 |
| | | | JP | 5305557 B2 | 02-10-2013 |
| | | | JP | 2006087098 A | 30-03-2006 |
| | | | JP | 2013176102 A | 05-09-2013 |
| | | | KR | 20060051386 A | 19-05-2006 |
| | | | MX | PA05009704 A | 25-05-2006 |
| | | | US | 2006061602 A1 | 23-03-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **C. CHARMARET ; O. LE MEUR.** Attention-based video reframing: validation using eye-tracking. *Proceedings of the 19th International Conference on Pattern Recognition,* 08 November 2008